# EUROPEAN PATENT APPLICATION

(11) **EP 2 357 751 A1**
(43) Date of publication of application: **17.08.2011**
(21) Application number: 10290078.4
(22) Date of filing: 17.02.2010
(51) Int. Cl.: H04L 1/00

(54) **Backhauling link callibration**

(71) Applicant: Alcatel Lucent, 75008 Paris (FR)
(72) Inventor: Braun, Volker, 70176 Stuttgart (DE); Halbauer, Hardy, 76275 Ettingen (DE)
(74) Representative: Kohler Schmid Möbus

(57) **Abstract**

The invention relates to a method for selecting a set of transport formats to be used for transmissions on a backhauling link (BL) between a base station (BS) and a relay node (RN) of a wireless communications cell (1), comprising: a) generating measurement signals (UL MS, DL MS), in particular a plurality of transport blocks or pilot signals, the measurement signals (UL MS, DL MS) having a transport format supported by the backhauling link (BL); b) transmitting the measurement signals (UL MS, DL MS) over the backhauling link (BL); c) evaluating a transmission quality for the transmission of the measurement signals (UL MS, DL MS) over the backhauling link (BL); repeating steps a) to c) for a plurality of transport formats, and, d) based on the transmission quality, selecting from the plurality of transport formats a set of transport formats to be used for subsequent transmissions of data packets on the backhauling link (BL). The invention also relates to a base station (BS) and to a relay node (RN) for implementing the method, and also to a communications cell (1) and a communications network (2) comprising the same.

## Description

### Field of the Invention

The invention relates to the field of telecommunications, and, more specifically, to transmissions in communications cells having at least one backhauling link between a base station and a relay node.

### Background

This section introduces aspects that may be helpful in facilitating a better understanding of the invention. Accordingly, the statements of this section are to be read in this light and are not to be understood as admissions about what is in the prior art or what is not in the prior art.

For a better understanding of the background of the technical problem, in the following an overview on the principles of relaying is given: Relaying is a method to increase coverage and cell edge performance in multi-cell wireless communication networks. A communication scheme with relaying may be as follows: a source sends packets to the relay node (RN) in a first time slot, and the relay node forwards the packets to the destination (typically a user equipment, UE) in a later time slot. In the downlink (DL), the source is typically a base station, e.g. an enhanced NodeB, eNB, and the destination is a user equipment served by the communications cell, i.e. the relaying scheme is: eNB -> RN -> UE. In the uplink (UL), the roles of the source and destination are interchanged, i.e. the relaying scheme is: UE -> RN -> eNB.

One of the relay types considered in 3GPP LTE(Long Term Evolution)-Advanced is the so-called Type II-Relay. A "type II" relay node is an in-band relaying node which typically has the following features:
- It does not have a separate Physical Cell ID and thus does not create any new cells.
- It is transparent to Release-8 UEs; i.e. a Rel-8 UE is not aware of the presence of a type 2 relay node.
- It can transmit on the Physical Downlink Shared Channel, PDSCH.
- At least, it does not transmit CRS (cell specific reference signals) and does not transmit on the Physical Downlink Control Channel, PDCCH.

When applying Type II relaying it is intended to use relay operations transparently to the UE. In other words, the two hops (instead of the one hop without relaying) should not be visibly to the UE. Therefore, specific relaying protocols have to be defined and standardized.

A simple example of downlink operation of a cooperative type II relaying scheme, integrated into Hybrid Automatic Repeat Request, HARQ, operation, is as follows:
- the eNB sends data packets e.g. in the form of transport blocks to UE and RN
- the RN successfully decodes the transport block, while the UE fails to decode the transport block
- the UE reports Not Acknowledged (NACK) to the eNB
- the RN is retransmitting the transport block at some time later, possibly simultaneously with the eNB
- the UE is receiving the retransmitted transport block correctly, as a channel quality / transmission quality on the access link (between RN and UE) is significantly better than on the direct link between eNB and UE.

For application in DL (and UL), this scheme requires that the RN detects the DL (and UL) scheduling grants (and DL ACK/NACK) for the UE and the UL ACK/NACK transmitted by the UE. To benefit from such a cooperative relaying scheme and to ensure proper operation of features like Hybrid Automatic Repeat Request, HARQ, the block error rate (BLER) on the backhauling link (between eNB and RN) must be virtually zero, as otherwise the relay node would not be able to contribute to the retransmissions.

The solution which may be applied when using HARQ operations on the eNB-UE direct link is the use of fast link adaptation. The basic protocol is as follows:
In the DL case:
   - the UE measures DL channel quality and reports it frequently to the eNB (Channel Quality Information, CQI, report)

   - the UE performs a Cyclic Redundancy Check, CRC, on received transport blocks and immediately (i.e. with delay of approx. 4ms) reports ACK/NACK to the eNB
   - the eNB can derive DL BLER from the received ACK/NACKs and can select DL transport formats based on CQI and DL BLER and other parameters such as buffer filling state, available transmit power etc.
In the UL case:
   - the eNB measures UL SINR from UL pilot sequences transmitted by the UE
   - the UE further reports power headroom (and buffer state)
   - the eNB can select UL transport formats (and UL transmit power) based on measured UL SINR and reported power headroom and buffer state.
   - the eNB performs CRC check on received transport blocks and immediately (i.e. with a delay of approx. 4ms) reports ACK/NACK to the UE.

In both cases (DL and UL), HARQ retransmissions are performed upon reporting of NACK by the receiving entity. Thus, this protocol requires fast signalling mechanisms for ACK/NACK, CQI and possibly other parameters such as power headroom and buffer state. Yet, this scheme does not provide specific procedures in case relaying is used. When applying this scheme to a relaying scenario, it would cause additional signalling load on the backhauling link.

However, in particular when using a Type II relay in Frequency Division Duplex, FDD, operation, a fast/frequent RN->eNB signalling would prevent the RN to cooperate in a large share of sub-frames, as in a time slot, the relay node may either transmit or receive on the backhauling link.

### Summary

The present invention is directed to addressing the effects of one or more of the problems set forth above. The following presents a simplified summary of the invention in order to provide a basic understanding of some aspects of the invention. This summary is not an exhaustive overview of the invention. It is not intended to identify key or critical elements of the invention or to delineate the scope of the invention. Its sole purpose is to present some concepts in a simplified form as a prelude to the more detailed description that is discussed later.

A first aspect of the invention relates to a method for selecting a set of transport formats to be used for transmissions on a backhauling link between a base station and a relay node of a wireless communications cell, comprising: a) generating measurement signals, in particular a plurality of transport blocks or pilot signals, the measurement signals having a transport format supported by the backhauling link; b) transmitting the measurement signals over the backhauling link; c) evaluating a transmission quality for the transmission of the measurement signals over the backhauling link; repeating steps a) to c) for a plurality of transport formats, and, based on the transmission quality, selecting from the plurality of transport formats a set of transport formats to be used for subsequent transmissions of data packets / transport blocks on the backhauling link.

The inventors propose to perform a calibration on the backhauling link by transmitting measurement signals in a plurality of supported transport formats for identifying, resp., selecting those transport formats which are admissible with respect to the transmission quality. The selected transport formats will then be used for subsequent transmissions of data to the user equipments (after the calibration). The calibration process may be initiated by the base station either periodically (e.g. every 24 hrs, configured by Operation & Maintenance, O&M) or on demand. In general, apart from the measurement signals, no further data may be transported on the backhauling link during the calibration process, such that the calibration process will typically be performed when the traffic load in the communications cell is low, e.g. during nighttime.

By using the calibration procedure as described above, the transmission format of the backhauling link may be set appropriately, i.e. such that the BLER on the backhauling link is very low (virtually zero) and the backhauling link may thus be made transparent to the protocols. It will be understood that the calibration process as described herein is particularly useful when the relay node does not move or moves only very slowly, such that the channel conditions on the backhauling link are stable on a longer time scale.

In one variant, the supported transport formats include modulation schemes having different modulation order and coding schemes having different code rates, wherein step a) comprises: generating measurement signals with modulation schemes having lower modulation order before generating measurement signals with modulation schemes having higher modulation order or vice versa, and wherein step a) preferably further comprises: generating measurement signals with coding schemes having lower code rate before generating measurement signals with coding schemes having higher code rate or vice versa, and/or wherein step b) preferably further comprises: transmitting measurement signals having the same transport format with different transmit power.

When performing the calibration process in the way described above, measurement signals with transport formats having a higher probability of being transmitted with low error rates may be tested before measurement signals having a lower probability to be transmitted with low error rates. Thus, it may be sufficient to test only a subset of the overall list of transport formats which are supported by the backhauling link. In other words, the base station may stop the calibration process if suitable transport format(s) have been identified and it can be expected that the remaining, untested transport formats will not be suitable for transmissions on the backhauling link due to higher modulation order and/or due to higher code rates. For example, when a 16QAM modulation format results in too high BLER on the backhauling link, there is no need to test e.g. a 64QAM transport format. Alternatively, it is also possible to test modulation schemes having higher modulation order before testing modulation schemes having lower modulation order, in particular when the backhauling link has a high channel quality.

Moreover, in particular when testing uplink transmissions on the backhauling link, the base station may - prior to the actual calibration phase - signal a configuration parameter to the relay node to set the uplink transmission power to be applied by the relay node for transmissions to the base station. Possibly, the calibration procedure may be repeated for multiple transmit power configurations of the relay node until at least one acceptable transport format can be found. Also the calibration procedure may be repeated for different transmit power settings to identify the suitable transport formats for each individual transmit power setting. This can be used to adapt the transmit power to the required backhauling link capacity, i.e. if only small backhaul capacity is needed, less efficient transport formats are sufficient and the transmit power can be reduced.

Typically, the set of selected transport formats comprises only transport formats having a transmission quality exceeding a pre-defined transmission quality threshold. The transmission quality threshold is a pre-defined value of the specific parameter which is used for evaluating the transmission quality on the backhauling link. For instance, when the block error rate is chosen for estimating the transmission quality, the transmission quality threshold will be a specific BLER value. For instance, the threshold may be set to e.g. about 0.1 %, such that for a selected transport format, more than 99.9% of the transmitted blocks will be received correctly.

In one variant, the method further comprises: in a step preceding step a), transmitting a message from the base station to the relay node for ordering the relay node to stop forwarding data packets to/from at least one user equipment served by the communications cell, and, after selecting the set of transport formats, sending a message to the relay node for ordering the relay node to start forwarding data packets to/from the at least one user equipment.

To start the calibration procedure on the backhauling link, the base station typically send a dedicated "start calibration" signaling message to the relay node, instructing the relay node to behave similar as (or identical to) a conventional user equipment (at least) on the physical layer and on the MAC layer and to stop packet forwarding during the calibration procedure. In this way, the backhauling link will be used only for transmitting measurement signals which allow for determining the transmission quality on the link such that a good statistics may be obtained.

Likewise, the calibration procedure will typically be terminated by the base station by sending a dedicated "start forwarding" signaling message to the relay node, instructing the relay node to stop behaving like a user equipment and to switch into relaying mode, i.e. to do packet forwarding.

In one variant, the transmission quality on the backhauling link is evaluated by using at least one of a signal-to-interference-noise-ratio, SINR, of the transmitted measurement signals and a block error rate, BLER, of measurement signals transmitted in the form of transport blocks. In case that transport blocks are used for the testing, the block error rate is a suitable indicator for the transmission quality on the link. The transport blocks used for the calibration procedure typically contain pseudo-random data or signaling data in their payload. In case of downlink transmission of transport blocks, the relay node may report ACK/NACK messages to the base station from which the base station may derive the BLER. In case of uplink transmission of transport blocks, the base station may directly derive the BLER from the cyclic redundancy checks. When using e.g. pilot signals as measurement signals, a suitable indicator for the transmission quality on the backhauling link is the SINR.

The transmission of measurement signals, e.g. of pilot signals, may also be used for improving the transmission quality on the backhauling link by optimizing antenna precoding weights and/or a MIMO rank of the transmissions, in case that the base station and/or the relay station use multiple transmit antennas. For downlink transmissions from a base station with multiple antennas, the relay node may report precoding feedback information (PMI) and/or rank information (RI) to the base station. In case that the relay node has multiple transmit antennas and applies precoding weights and/or spatial multiplexing (MIMO rank = 1, 2, ...) for uplink transmissions, these may be optimized in that during the calibration process, the base station configures the precoding weights applied by the relay node (via base station -> relay node signaling), and determines the optimum weights based on uplink measurements.

The method as described above may be implemented e.g. in a computer program product comprising code means for implementing all the method steps. The computer program product may be implemented using one or more suitable software and/or hardware components and may in particular be realized with distributed components.

A second aspect relates to a base station for a communications cell of a wireless communications system, comprising: a generating unit for generating a plurality of downlink measurement signals, in particular transport blocks or pilot signals, the downlink measurement signals having a transport format supported by a backhauling link to a relay node of the communications cell and/or for generating scheduling information for scheduling transmission of uplink measurement signals from the relay node to the base station, the uplink measurement signals having a transport format supported by the backhauling link, a transfer unit for transmitting the downlink measurement signals to the relay node and/or for receiving the uplink measurement signals from the relay node, an evaluation unit for evaluating a transmission quality for the transmission of the uplink and/or downlink measurement signals, and a selection unit for selecting from the plurality of transport formats a set of transport formats to be used for downlink and/or uplink transmissions of transport blocks on the backhauling link, the selection being based on the transmission quality on the backhauling link. The base station may be adapted to perform the calibration procedure simultaneously in UL and DL, or first in DL and then in UL (or vice versa) or only in one link direction. It will be understood that the downlink transmission quality may alternatively be evaluated in the relay node if the latter is equipped with a suitable evaluating unit.

In one embodiment, the generating unit is adapted for generating signaling information for signaling a transmission power to be used for the transmission of the uplink measurement signals to the relay node. Thus, in addition to optimizing a transport format on the backhauling link, a transmit power of the relay node may also be optimized. An optimized transmit power for the relay node is set at a power level which is chosen so high that an appropriate set of transport formats may be used, but not higher, such that no transmit power will be wasted.

In a further embodiment, the evaluation unit is adapted to evaluate the transmission quality using at least one of a signal-to-interference-noise-ratio, SINR, of the received measurement signals and a block error rate, BLER, of measurement signals transmitted in the form of transport blocks. For uplink transmissions, the base station may derive the SINR from the received pilot sequences. For downlink transmissions, the relay node may derive the SINR from the received pilot sequences and report it to the base station. From the reported SINR the base station can derive a suitable transport format if additional information about the relay node receiver performance is known to the base station (e.g. BLER versus SINR characteristics for different transport formats, e.g. reported by means of RN->eNB signaling, e.g. during the initiation procedure or as a response to the "start calibration" message).

Typically, the selection unit is adapted to include only transport formats having a transmission quality exceeding a pre-defined transmission quality threshold into the set of selected transport formats. The threshold may be set as a target value of the BLER, SINR, or of any other suitable measure for the transmission quality on the backhauling link.

A third aspect relates to a relay node for a communications cell of a wireless communications network, comprising: a switching unit for switching between a first operation mode in which the relay node forwards data to/from at least one user equipment arranged in the communications cell and a second operation mode in which the relay node only performs transmissions/receptions on a backhauling link to a base station, the switching between the first and the second operation mode being based on messages received from the base station. As stated above, the relay node may switch from a first, normal operation mode ("forwarding mode") to a second mode ("calibration mode") for selecting suitable transport formats for subsequent forwarding of data packets over the backhauling link. The switching between the two modes is typically triggered by explicit messages from the base station.

In one embodiment, the relay node further comprises: an evaluation unit for evaluating a transmission quality of the backhauling link from the base station to the relay station, the evaluation of the transmission quality being based on at least one of a signal-to-interference-noise-ratio, SINR, of received measurement signals, in particular of pilot signals, and a block error rate, BLER, of measurement signals received in the form of transport blocks. In this way, the relay node may itself perform the evaluation of the transmission quality on the backhauling link, in particular for downlink transmissions, the result of the evaluation being signaled to the base station.

Further aspects of the invention are implemented in a communications cell, the communications cell comprising: a base station and at least one relay node of the type described above, and in a communications network comprising at least one such communications cell. By using the calibration procedure described above, the transmission quality on the backhauling link can be improved, leading to an almost zero bit error rate for subsequent transmissions of data packets / transport blocks over the backhauling link. Consequently, the transmission performance (throughput) of the cell and thus of the entire transmission network may be enhanced.

Further features and advantages are stated in the following description of exemplary embodiments, with reference to the figures of the drawing, which shows significant details, and are defined by the claims. The individual features can be implemented individually by themselves, or several of them can be implemented in any desired combination.

### Brief Description of the Figures

Exemplary embodiments are shown in the diagrammatic drawing and are explained in the description below. The following are shown:
- **Fig. 1a**: shows a schematic diagram of an embodiment of a communications cell with a relay node in a first operation mode, forwarding data on an access link to/from a user equipment,

- **Fig. 1b**: shows a schematic diagram of the communications cell of Fig. 1 a with the relay node in a second operation mode for calibration of a backhauling link to a base station,
- **Fig. 2**: shows a list of supported transport formats for the backhauling link of Fig. 1a and Fig. 1b, and
- **Fig. 3**: shows a table with a BLER statistics derived for one direction of the backhauling link.

### Description of the Embodiments

The functions of the various elements shown in the Figures, including any functional blocks labeled as 'processors', may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term 'processor' or 'controller' should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

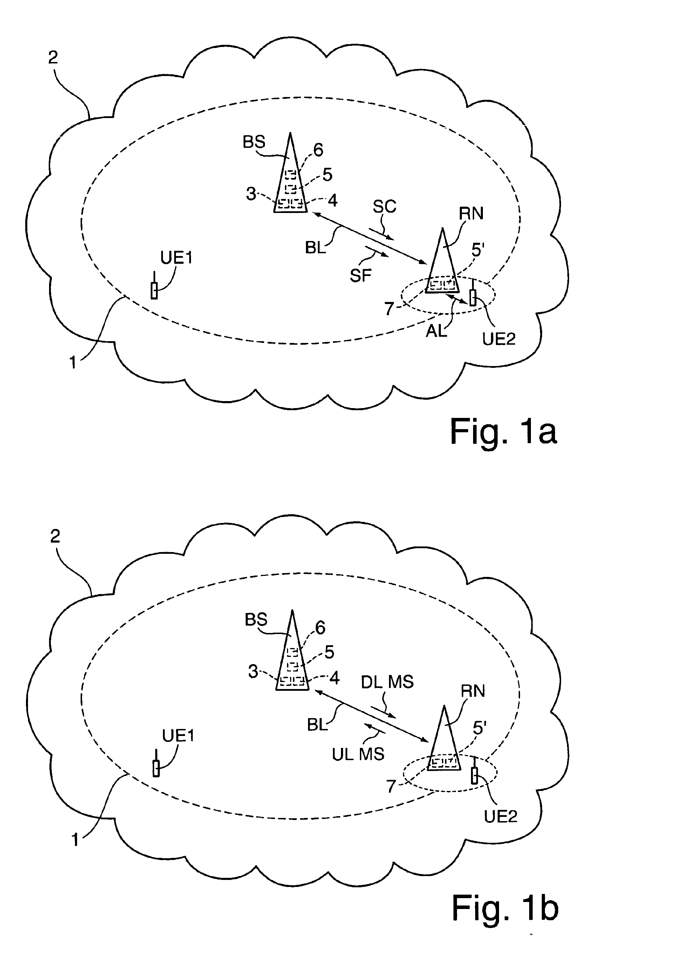

**Fig. 1a** shows a communications cell **1** of a wireless communications network **2** which in the present example is in compliance with the LTE-advanced standard. The communications cell 1 has a base station **BS,** being also referred to as eNodeB, the base station BS serving a plurality of user equipments **UE1**, **UE2**. As the second user equipment UE2 shown in Fig. 1a is at the edge of the cell 1 and thus almost out of the range of the radio transmissions provided by the base station BS, a relay node **RN** is arranged in the cell 1, the relay node RN being used for forwarding traffic from the base station BS to the second user equipment UE2 and vice versa. For this purpose, a bidirectional access link **AL** is established between the relay node RN and the second user equipment UE2. Likewise, a backhauling link **BL** is established between the base station BS and the relay node RN. In cooperative forwarding schemes, a further direct link (not shown) may be established between the base station BS and the second user equipment UE2.

Typically, in the initiation phase of the relay node RN, a (bidirectional) signaling link between the base station BS and the relay node RN will be established. This may be achieved in that an identifier (also known as Radio Network Temporal Identifier, RNTI) is assigned to the relay node RN by the base station BS, and the signaling link is carried on a shared channel (e.g. PDSCH in the downlink and PUSCH in the uplink).

For making the backhauling link BL transparent to the protocols for traffic forwarding, a (block) error rate of data transmissions over the backhauling link BL should be made as small as possible. For that purpose, a calibration procedure is performed on the backhauling link BL in order to identify appropriate transmission formats, as described in the following:
As a first step of the calibration procedure, the base station BS sends a dedicated "start calibration" signaling message **SC** to the relay node RN, the message instructing the relay node RN to behave similar as (or identical to) a conventional user equipment UE1, UE2 (at least) on the physical layer and on the MAC layer and to stop the packet forwarding on the access link AL during the calibration procedure.

As indicated in **Fig. 1b**, during the calibration procedure, downlink measurement signals **DL MS** and uplink measurement signals **UL MS** are transmitted from the base station BS to the relay node RN and vice versa.

The base station BS comprises a generating unit **3** for generating the downlink measurement signals DL MS, the generating unit 3 being further adapted to generate scheduling information for scheduling the transmission of the uplink measurement signals UL MS from the relay node RN to the base station BS.

A transfer unit **4** (transceiver) of the base station BS transmits the downlink measurement signals DL MS generated in the generating unit 3 to the relay node RN, e.g. by using a Physical Downlink Shared Channel, PDSCH, of the backhauling link BL. In the present example, the downlink measurement signals DL MS are generated by the generating unit 3 in the form of downlink transport blocks. The transport blocks may contain signaling information which has to be provided from the base station BS to the relay node RN, or possibly may have a pseudo-random payload.

Before, after or simultaneously with the transmission of the downlink measurement signals DL MS, the base station BS may schedule the uplink measurement signals UL MS e.g. in the form of uplink transport blocks (on a Physical Uplink Shared Channel, PUSCH) by sending uplink scheduling grants to the relay node RN, and the relay node RN shall transmit the scheduled transport blocks in uplink. As in the downlink, the transport blocks may contain signaling information (from the relay node RN to the base station BS) or a pseudo-random payload.

In a subsequent step, an evaluation unit 5 of the base station BS evaluates a transmission quality for the transmission of the uplink measurement signals UL MS received in the base station BS and possibly also for the downlink measurement signals DL MS (as explained below). The base station BS may also send downlink ACK/NACKs in response to the PUSCH transport blocks received from the relay node RN in the uplink.

For evaluating the transmission quality for the downlink in the base station BS, the relay node RN may send Channel Quality Information, CQI, (or CQI/PMI/Rl, see below) reports to the base station BS. The CQI may be sent in addition to uplink ACK/NACK in response to the PDSCH transport blocks transmitted as downlink measurement signals DL MS. The CQI may be transmitted e.g. periodically with a CQI reporting period configured by signaling from the base station BS to the relay node RN during the initiation procedure or within the "start calibration" message.

Alternatively or in addition, for evaluating the transmission quality of the downlink measurement signals DL MS, an evaluation unit 5' arranged in the relay node RN may be used. The evaluation unit 5' may perform an evaluation of the transmission quality for the respective transport formats and may report the results of the evaluation to the base station BS. The relay node RN may also transmit further transmit power headroom information (and optionally buffer state information) to the base station BS.

One skilled in the art will understand that both the uplink and downlink measurement signals UL MS, DL MS will have a transport format which is supported by the backhauling link BL. For selecting an appropriate transport format for transmissions on the backhauling link when the relay node RN is switched to the forwarding mode, measurement signals UL MS, DL MS having a plurality of different transport formats are transmitted over the backhauling link BL during the calibration procedure. For each transport format, a respective transmission quality on the backhauling link BL is evaluated. Finally, a selection unit 6 of the base station BS selects an appropriate set of transport formats from a list of transport formats which are supported on the backhauling link BL, the selection being made in dependence of the transmission quality of the respective transport formats.

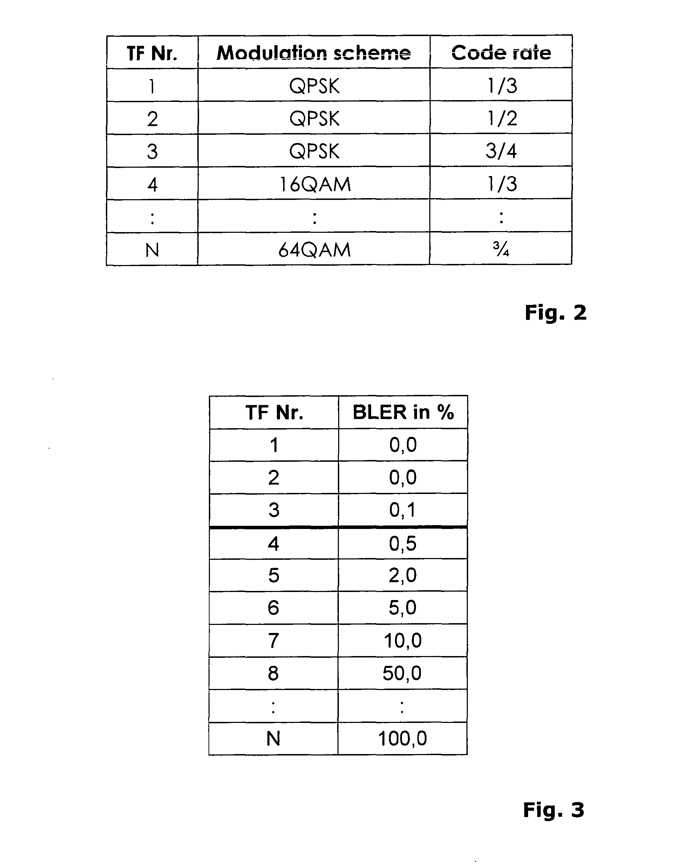

In the following, the calibration procedure will be exemplified for the case that measurement signals in the form of transport blocks are used. **Fig. 2** shows a list of transport formats **TF1** to **TFN** which are supported by the backhauling link BL (both in downlink and uplink). In the present case, each transport format TF1 to TFN is characterized by a modulation scheme and a code rate. At least one of the modulation order of the modulation schemes QPSK, 16QAM, 64QAM and the code rate 1/3, 1/2, 3/4 of the coding schemes of the transport formats TF1 to TFN are different from each other. It will be understood that the supported transport formats depend on the type of backhauling link and are not limited to the ones described above, i.e. supported transport formats may also include other modulation schemes / code rates.

In the present example, the base station BS steps through the list of supported transport formats (from top to bottom) and schedules the transmission of transport blocks formatted with the respective modulation scheme and code rate, e.g. starting with the first transport format TF1 with QPSK modulation and a low code rate (e.g. 1/3), in the next step using the second transport format TF2 with QPSK having a higher code rate (e.g. 1/2), then using a third transport format TF3 of the QPSK type and yet a higher code rate (e.g. 3/4). In subsequent steps, the procedure is repeated for 16QAM and different code rates (e.g. 1/3, 1/2, 3/4), and so on.

In each step of this procedure, a respective transport format TF1 to TFN (i.e. combination of modulation scheme and code rate) may be transmitted in multiple (consecutive) sub-frames, so that for each transport format TF1 to TFN, the evaluation unit **5, 5'** may compute a good statistics on the error rate performance (taking into account the small scale fading). An example of such a statistics for the block error rate BALER as a measure for the transmission quality is illustrated in **Fig. 3****.**

Given the result shown in Fig. 3, the selection unit **6** of the base station BS may compare the BLER with a pre-defined transmission quality threshold, which may be a BLER value of equal to or less than 0.1 % in the present example. Only those transport formats TF1 to TFN which have a BLER which is equal to or below the BLER threshold of 0.1 % will be included into the set of transport formats TF1 to TF3 to be used for subsequent transmissions of transport blocks over the backhauling link BL. In other words, the base station BS will avoid to use the higher transport formats TF4 to TFN on the backhauling link. The BLER threshold parameter which is used by the selection unit **6** may be provided / set e.g. in the form of an Operation & Maintenance, O&M, parameter. One skilled in the art will readily appreciate that although in the present example, three transport formats TF1 to TF3 have been selected from the set of transport formats TF1 to TFN, in the general case, a set of K (K≤N) transport formats TF1 to TFK may be selected from the list of transport formats TF1 to TFN.

One skilled in the art will appreciate that it may be sufficient to perform the calibration process only for a subset of the supported transport formats TF1 to TFN. For instance, the base station BS may stop the calibration process if suitable transport formats (TF1 to TF3) have been identified and it can be expected that the remaining yet untested transport blocks will not be suitable due to higher modulation order or due to higher code rate (leading to a BLER which is above the threshold of 0.1 %). For instance, if a 16QAM modulation format results in too high BLER, then there is no need to test the 64QAM transport formats.

It will be understood that transport blocks are not the only possibility of implementing measurement signals which are indicative of the transmission quality on the backhauling link BL. For instance, the base station may use measured signal to interference and noise ratio (SINR) values of PHY layer signals (e.g. for a static transport format with QPSK) and use this information as an indicator of the transmission quality on the backhauling link BL, which may also allow the base station BS to find appropriate transport formats.

In the uplink, the base station BS may derive the SINR from received pilot sequences. For downlink transmissions, the relay node may derive the SINR from the received pilot sequences and report it to the base station. From the reported SINR the base station can derive a suitable transport format if additional information about the relay node receiver performance is known to the base station (e.g. BLER versus SINR characteristics for different transport formats, e.g. reported by means of RN->eNB signaling, e.g. during the initiation procedure or as a response to the "start calibration" message).

In particular, the base station BS may use the same link adaptation as for a normal user equipment (e.g. SINR based link adaptation in uplink), but may use different thresholds for selection of the transport formats, adapted to the different target BLER values.

It will be understood that in the uplink direction, the base station BS may, prior to the actual calibration phase, signal a configuration parameter to the relay node RN to set the uplink transmission power to be applied by the relay node RN for transmissions to the base station BS. The signaling may be performed during the initiation procedure or within the "start calibration" message SC. In this way, the calibration procedure may be repeated for multiple transmit power configurations of the relay node RN, such that an optimized transmit power for the relay node may be found. Such a power level allows to use a transport format with sufficiently large capacity on the backhauling link BL, but at the same time avoids wasting transmit power.

The above calibration procedure may also be applied for optimization of the backhauling link BL when the base station BS applies multiple transmit antennas and precoding weights / spatial multiplexing (MIMO rank = 1, 2, ...) for downlink transmissions.

The optimization can be achieved by the proposed calibration technique in that the relay node RN reports precoding feedback information (PMI) and/or rank information (RI) to the base station BS. Alternatively, the optimization may be performed by the proposed calibration technique in that the base station BS varies the precoding weights / MIMO rank during the calibration phase and determines the optimum weights based on reported UL ACK/NACK. This is particularly useful if the relay node RN has no capability to report precoding and/or rank feedback information. Alternatively or in addition, the base station BS may also apply Space Division Multiple Access, SDMA, e.g. transmitting simultaneously using the same radio resources to multiple relay nodes, typically pairs of relay nodes. Suitable relay node pairs may be identified and precoding weights may be optimized during the calibration process.

It is also possible to optimize uplink transmissions on the backhauling link BL in case that the relay node RN applies multiple transmit antennas and precoding weights / spatial multiplexing (MIMO rank = 1, 2, ...). This can be achieved in that during the calibration process, the base station BS configures the precoding weights applied by the relay node RN (via base station BS to relay node RN signaling), and the optimum weights are determined by the base station BS based on uplink measurements. Alternatively or in addition, this may also be achieved in that during the calibration process, the relay node RN selects the optimum precoding weights based on measurements e.g. of downlink ACK/NACK.

The optimum precoding weights determined during the calibration phase may then later be applied by the base station BS and/or the relay node RN for conveying data packets over the backhauling link BL. With a type II relay node RN, this implies: For the initial transmission of data packets on the PDSCH, the base station BS may apply precoding weights optimized for the direct link from the base station BS to the user equipment UE2 (not shown in Figs. 1a,b) or optimized for the backhauling link BL. For the retransmissions of data packets on the PDSCH, the base station BS may apply precoding weights optimized for the base station BS to user equipment UE2 direct link. For the retransmissions of data packets on the PUSCH, the relay node RN may apply precoding weights optimized for the uplink direction of the backhauling link BL.

In any case, the calibration procedure will be terminated by the base station BS, e.g. by sending a dedicated "start forwarding" signaling message SF to the relay node RN (see Fig. 1a), that shall instruct the relay node RN to stop behaving like a user equipment and to switch into relaying mode, i.e. to do packet forwarding on the access link AL. The forwarding of data packets / transport blocks on the backhauling link BL will then be performed using one of the transport formats TF1 to TF3 which have been selected in the calibration process. The switching between the forwarding mode and the calibration mode may be performed by a dedicated switching unit 7 arranged in the relay node RN.

The calibration procedure may be initiated by the base station BS periodically (e.g. every 24 hrs, configured by O&M configuration) or on demand: For instance, the calibration may be performed when the base station BS changes downlink transmit power or is informed of downlink transmit power changes of a neighboring cell, or when the base station BS detects that BLER on the backhauling link BL becomes excessive, e.g. through direct measurement (UL CRC or UL ACK/NACK), or via observation of the HARQ protocols between the base station BS and the user equipment UE2 (in particular for a Type II relay, e.g. if residual BLER becomes excessive). The calibration procedure may also be initiated when the base station BS is informed by the relay node RN via relay node RN to base station BS signaling that an excessive BLER on the backhauling link BL (in particular in the downlink direction) has been detected.

The backhauling link calibration technique as described above typically requires that the relay node RN has a fixed or slowly moving location with respect to the location of the base station BS (e.g. the relay node RN is not mounted on a bus or train etc.). This condition will be satisfied in many cases in which the relay node RN has a static position and is e.g. is mounted to a lamp post or building wall. Therefore, the average path loss (measured over a longer period, say approx. 100 ms) between the base station BS and the relay node RN is constant. Nevertheless, the signal to noise and interference ratio experienced by the relay node RN may change: on a slow basis due to a changing environment, e.g. when a macro cell changes its transmission power, or on a fast basis (approx. symbol duration) due to small scale fading. Often, a Rician fading environment can be assumed for a backhauling link BL with significant line-of-sight propagation components.

The proposed backhauling link calibration technique is particularly suitable / desirable for Type II relays, for the following reason: With Type 11 relays, frequent signaling from the relay node RN to the base station BS may prevent the relay node RN to contribute to the packet forwarding in a large fraction of sub-frames, in particular when a Frequency Division Duplex, FDD, mode is used.

It will be appreciated that the proposed backhauling link calibration technique may also be useful with Type I relays (i.e. a full base station with wireless in-band backhaul). In this case, the base station may derive a BLER statistics similar to the one shown in Fig. 3 not only during a calibration procedure, but also "on the fly" during forwarding operation (provided that the respective signaling requirements will be incorporated into the standard).

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Also, the description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Method for selecting a set of transport formats (TF1 to TF3) to be used for transmissions on a backhauling link (BL) between a base station (BS) and a relay node (RN) of a wireless communications cell (1), comprising:
a) generating measurement signals (UL MS, DL MS), in particular a plurality of transport blocks or pilot signals, the measurement signals (UL MS, DL MS) having a transport format (TF1 to TFN) supported by the backhauling link (BL),
b) transmitting the measurement signals (UL MS, DL MS) over the backhauling link (BL),
c) evaluating a transmission quality for the transmission of the measurement signals (UL MS, DL MS) over the backhauling link (BL), repeating steps a) to c) for a plurality of transport formats (TF1 to TFN), and,
d) based on the transmission quality, selecting from the plurality of transport formats (TF1 to TFN) a set of transport formats (TF1 to TF3) to be used for subsequent transmissions of data packets on the backhauling link (BL).

2. Method according to claim 1, wherein the supported transport formats (TF1 to TFN) include modulation schemes (QPSK, 16QAM, 64QAM) having different modulation order and coding schemes having different code rates (1/3, 1/2, 3/4), and
wherein step a) comprises:
generating measurement signals (UL MS, DL MS) with modulation schemes (QPSK) having lower modulation order before generating measurement signals with modulation schemes (16QAM, 64QAM) having higher modulation order or vice versa, and
wherein step a) preferably further comprises:
generating measurement signals (DL MS, UL MS) with coding schemes having lower code rate (1/3) before generating measurement signals (DL MS, UL MS) with coding schemes having higher code rate (1/2, 3/4) or vice versa, and/or
wherein step b) preferably further comprises: transmitting measurement signals (DL MS, UL MS) having the same transport format with different transmit power.

3. Method according to any one of the preceding claims, wherein the set of selected transport formats (TF1 to TF3) comprises only transport formats (TF1 to TF3) having a transmission quality exceeding a pre-defined transmission quality threshold.

4. Method according to any one of the preceding claims, further comprising:
in a step preceding step a), transmitting a message from the base station (BS) to the relay node (RN) for ordering the relay node (RN) to stop forwarding data to/from at least one user equipment (UE2) arranged in the communications cell (1), and, after selecting the set of transport formats (TF1 to TF3), sending a message to the relay node (RN) for ordering the relay node (RN) to start forwarding data to/from the at least one user equipment (UE2).

5. Method according to any one of the preceding claims, wherein the transmission quality is evaluated using at least one of a signal-to-interference-noise-ratio, SINR, of the transmitted measurement signals (UL MS, DL MS) and a block error rate, BLER, of measurement signals (UL MS, DL MS) transmitted in the form of transport blocks.

6. Method according to any one of the preceding claims, further comprising:
optimizing antenna precoding weights and/or a MIMO rank for transmissions on the backhauling link (BL),

7. Computer program product comprising code means for implementing all the steps of the method according to any one of claims 1 to 6.

8. Base station (BS) for a communications cell (1) of a wireless communications system (2), comprising:
a generating unit (3) for generating downlink measurement signals (DL MS), in particular transport blocks or pilot signals, the downlink measurement signals (DL MS) having a transport format (TF1 to TFN) supported by a backhauling link (BL) to a relay node (RN) of the communications cell (1) and/or for generating scheduling information for scheduling transmission of uplink measurement signals (UL MS) from the relay node (RN) to the base station (BS), the uplink measurement signals (UL MS) having a transport format (TF1 to TFN) supported by the backhauling link (BL),
a transfer unit (4) for transmitting the downlink measurement signals (DL MS) to the relay node (RN) and/or for receiving the uplink measurement signals (UL MS) from the relay node (RN),
an evaluation unit (5) for evaluating a transmission quality for the transmission of the uplink and/or downlink measurement signals (UL MS, DL MS), and
a selection unit (6) for selecting from the plurality of transport formats (TF1 to TFN) a set of transport formats (TF1 to TF3) to be used for subsequent downlink and/or uplink transmissions of data packets on the backhauling link (BL), the selection being based on the transmission quality on the backhauling link (BL).

9. Base station according to claim 8, wherein the generating unit (3) is adapted for generating signaling information for signaling a transmission power to be used for the transmission of the uplink measurement signals (UL MS) to the relay node (RN).

10. Base station according to claim 8 or 9, wherein the evaluation unit (5) is adapted to evaluate the transmission quality using at least one of a signal-to-interference-noise-ratio, SINR, for the transmission of the measurement signals (UL MS, DL MS) and a block error rate, BLER, for measurement signals (UL MS, DL MS) transmitted in the form of transport blocks.

11. Base station according to any one of claims 8 to 10, wherein the selection unit (6) is adapted to include only transport formats (TF1 to TF3) having a transmission quality exceeding a pre-defined transmission quality threshold into the set of selected transport formats (TF1 to TF3).

12. Relay node (RN) for a communications cell (1) of a wireless communications network (2), comprising:
a switching unit (7) for switching between a first operation mode in which the relay node (RN) forwards data packets to/from at least one user equipment (UE2) arranged in the communications cell (1) and a second operation mode in which the relay node (RN) only performs transmissions on a backhauling link (BL) to a base station (BS), the switching between the first and the second operation mode being based on messages (SC, SF) received from the base station (BS).

13. Relay node according to claim 13, further comprising:
an evaluation unit (5') for evaluating a transmission quality on the backhauling link (BL) to the base station (BS), the evaluation of the transmission quality being based on at least one of a signal-to-interference-noise-ratio, SINR, of received measurement signals (DL MS), in particular pilot signals, and a block error rate, BLER, of measurement signals (DL MS) received in the form of transport blocks.

14. Communications cell (1), comprising:
a base station (BS) according to any one of claims 8 to 11, and
at least one relay node (RN) according to claim 12 or 13.

15. Communications network (2), comprising at least one communications cell (1) according to claim 14.

## Amended claims

### Amended claims in accordance with Rule 137(2) EPC.

**1.** Method for selecting a set of transport formats (TF1 to TF3) to be used for transmissions on a backhauling link (BL) between a base station (BS) and a relay node (RN) of a wireless communications cell (1), comprising:
a) generating measurement signals (UL MS, DL MS) having a transport format (TF1 to TFN) supported by the backhauling link (BL),
b) transmitting the measurement signals (UL MS, DL MS) over the backhauling link (BL),
c) evaluating a transmission quality for the transmission of the measurement signals (UL MS, DL MS) over the backhauling link (BL), repeating steps a) to c) for a plurality of transport formats (TF1 to TFN), and,
d) based on the transmission quality, selecting from the plurality of transport formats (TF1 to TFN) a set of transport formats (TF1 to TF3) to be used for subsequent transmissions of data packets on the backhauling link (BL),
wherein the method further comprises:
in a step preceding step a), transmitting a message from the base station (BS) to the relay node (RN) for ordering the relay node (RN) to stop forwarding data to/from at least one user equipment (UE2) arranged in the communications cell (1), and
in a step following step d), sending a message to the relay node (RN) for ordering the relay node (RN) to start forwarding data to/from the at least one user equipment (UE2).

**2.** Method according to claim 1, wherein the supported transport formats (TF1 to TFN) include modulation schemes (QPSK, 16QAM, 64QAM) having different modulation order and coding schemes having different code rates (1/3, 1/2, 3/4), and
wherein step a) comprises:
generating measurement signals (UL MS, DL MS) with modulation schemes (QPSK) having lower modulation order before generating measurement signals with modulation schemes (16QAM, 64QAM) having higher modulation order or vice versa, and
wherein step a) further comprises:
generating measurement signals (DL MS, UL MS) with coding schemes having lower code rate (1/3) before generating measurement signals (DL MS, UL MS) with coding schemes having higher code rate (1/2, 3/4) or vice versa.

**3.** Method according to claim 1, wherein step b) further comprises:
transmitting measurement signals (DL MS, UL MS) having the same transport format with different transmit power.

**4.** Method according to any one of the preceding claims, wherein the set of selected transport formats (TF1 to TF3) comprises only transport formats (TF1 to TF3) having a transmission quality exceeding a pre-defined transmission quality threshold.

**5.** Method according to any one of the preceding claims, wherein the transmission quality is evaluated using at least one of a signal-to-interference-noise-ratio, SINR, of the transmitted measurement signals (UL MS, DL MS) and a block error rate, BLER, of measurement signals (UL MS, DL MS) transmitted in the form of transport blocks.

**6.** Method according to any one of the preceding claims, further comprising:
reporting at least one of antenna precoding weights and a MIMO rank for transmissions on the backhauling link (BL).

**7.** Computer program product comprising code means for implementing all the steps of the method according to any one of claims 1 to 6.

**8.** Base station (BS) for a communications cell (1) of a wireless communications system (2), comprising:
a generating unit (3) for generating downlink measurement signals (DL MS) having a transport format (TF1 to TFN) supported by a backhauling link (BL) to a relay node (RN) of the communications cell (1) and/or for generating scheduling information for scheduling transmission of uplink measurement signals (UL MS) from the relay node (RN) to the base station (BS), the uplink measurement signals (UL MS) having a transport format (TF1 to TFN) supported by the backhauling link (BL),
a transfer unit (4) for transmitting the downlink measurement signals (DL MS) to the relay node (RN) and/or for receiving the uplink measurement signals (UL MS) from the relay node (RN),
an evaluation unit (5) for evaluating a transmission quality for the transmission of the uplink and/or downlink measurement signals (UL MS, DL MS), and
a selection unit (6) for selecting from the plurality of transport formats (TF1 to TFN) a set of transport formats (TF1 to TF3) to be used for subsequent downlink and/or uplink transmissions of data packets on the backhauling link (BL), the selection being based on the transmission quality on the backhauling link (BL),
wherein the base station (BS) is adapted to send a dedicated "start calibration" signaling message to the relay node (RN) for ordering the relay node to stop forwarding data to/from at least one user equipment (UE2) arranged in the communications cell (1), and wherein the base station (BS) is adapted to send a dedicated "start forwarding" signaling message to the relay node (RN) for ordering the relay node to start forwarding data to/from the at least one user equipment (UE2).

**9.** Base station according to claim 8, wherein the generating unit (3) is adapted for generating signaling information for signaling a transmission power to be used for the transmission of the uplink measurement signals (UL MS) to the relay node (RN).

**10.** Base station according to claim 8 or 9, wherein the evaluation unit (5) is adapted to evaluate the transmission quality using at least one of a signal-to-interference-noise-ratio, SINR, for the transmission of the measurement signals (UL MS, DL MS) and a block error rate, BLER, for measurement signals (UL MS, DL MS) transmitted in the form of transport blocks.

**11.** Base station according to any one of claims 8 to 10, wherein the selection unit (6) is adapted to include only transport formats (TF1 to TF3) having a transmission quality exceeding a pre-defined transmission quality threshold into the set of selected transport formats (TF1 to TF3).

**12.** Relay node (RN) for a communications cell (1) of a wireless communications network (2), comprising:
a switching unit (7) for switching between a first operation mode in which the relay node (RN) forwards data packets to/from at least one user equipment (UE2) arranged in the communications cell (1) and a second operation mode in which the relay node (RN) only performs transmissions of measurement signals (UL MS, DL MS) on a backhauling link (BL) to a base station (BS), the switching between the first and the second operation mode being based on messages (SC, SF) received from the base station (BS).

**13.** Relay node according to claim 12, further comprising:
an evaluation unit (5') for evaluating a transmission quality on the backhauling link (BL) to the base station (BS), the evaluation of the transmission quality being based on at least one of a signal-to-interference-noise-ratio, SINR, of received measurement signals (DL MS) and a block error rate, BLER, of measurement signals (DL MS) received in the form of transport blocks.

**14.** Communications cell (1), comprising:
a base station (BS) according to any one of claims 8 to 11, and at least one relay node (RN) according to claim 12 or 13.

**15.** Communications network (2), comprising at least one communications cell (1) according to claim 14.
